# EUROPEAN PATENT APPLICATION

(11) **EP 1 640 226 A1**
(43) Date of publication of application: **29.03.2006**
(21) Application number: 05016909.3
(22) Date of filing: 03.08.2005
(51) Int. Cl.: B60R 22/48

(54) **Seatbelt use-state warning device**

(30) Priority: 22.09.2004 JP 2004274901
(71) Applicant: Mazda Motor Corporation, Aki-gun, Hiroshima 735-8670 (JP)
(72) Inventor: Ide, Yoshikazu, Aki-gun Hiroshima 730-8670 (JP); Fukushima, Masanobu, Aki-gun Hiroshima 730-8670 (JP); Yoshimura, Mie, Aki-gun Hiroshima 730-8670 (JP); Okada, Kenji, Aki-gun Hiroshima 730-8670 (JP); Kuge, Tomoyuki, Aki-gun Hiroshima 730-8670 (JP); Ikura, Kazunori, Aki-gun Hiroshima 730-8670 (JP)
(74) Representative: Müller-Boré & Partner Patentanwälte

(57) **Abstract**

The use state of the seatbelt is warned in the start-warning mode during the specified start-warning period of time after the starting of the power source of the vehicle. The warning by the warning device is disabled when the specified start-warning period of time has lapsed after the power source starting (step S15). The warning device to warn the use state of the seatbelt are enabled for the specified period of time (step S17 - S20) when the use state of the seatbelt detected by the seatbelt use-state detecting device changes during the operation of the vehicle power source (step S12). When the seatbelt is changed from its state of use to its state of non-use, the warning is conducted with the harder warning stimulation characteristic (steps S18, S19). Accordingly, there can be provided the seatbelt use-state warning device which can warn the driver properly.

## Description

The present invention relates to a seatbelt use-state warning device, a control method and a computer program product, particularly to the seatbelt use-state warning device which can indicate the use state of the seatbelt with a warning device such as a LED.

For example, European Patent Application Publication No. 1428733A1 discloses a technology that the sate of non-use of the seatbelt of the vehicle is warned. Specifically, there are provided at the indicating portion a plurality of LEDs operative to be turned on selectively according to ON/OFF state of the buckle switch provided at the seatbelt, and thereby the state of the seatbelt, namely the state of use and the state of non-use of the seatbelt, is indicated all the time.

The constitution disclosed in the above-described publication provides a kind of failsafe function. Namely, generally, when there exists a malfunction such as a wire breaking, the state of non-use of the seatbelt would not be indicated, and thereby there would be a problem that it would not be determined whether the malfunction has occurred or the seatbelt is in the state of non-use. The constitution disclosed in the above-described publication, however, can solve this problem.

The present invention has been devised in view of the above-described problem, and an object of the present invention is to provide a seatbelt use-state warning device which can warn the driver properly without unnecessary stimulations.

This object is solved by the seatbelt use-state warning device according to the present invention of claim 1, a control method according to claim 8 and by a computer program product according to claim 10. Preferred embodiments of the present invention are subject of the dependent claims.

According to the present invention, there is provided a seatbelt use-state warning device, comprising at least one seatbelt use-state detecting device to detect a use/non-use or operation of at least one seatbelt of a vehicle, at least one warning device to warn a driver of a use state or operation of the seatbelt based on a detecting result of the seatbelt use-state detecting device, and a control device to control the warning device, wherein the control device is configured or constituted so as to warn the use state of the seatbelt in a start-warning mode during a specified (i.e. predetermined or predeterminable) start-warning period of time after a starting of a power source of the vehicle, to disable the warning by the warning device when the specified (i.e. predetermined or predeterminable) start-warning period of time has lapsed after the power source starting, and to enable the warning device to warn the use state of the seatbelt for a specified (i.e. predetermined or predeterminable) period of time when the use state or operation of the seatbelt detected by the seatbelt use-state detecting device changes during an operation of the vehicle power source.

Accordingly, since the use state of the seatbelt is indicated in the start-warning mode during the start period of time so that the driver can recognize the state of use or operation of the seatbelt, the driver can properly know the use state of the passenger's seatbelt to confirm the safety at this point. Meanwhile, when the specified start-warning period of time has lapsed after the power source starting, the warning by the warning device is disabled at the specified timing and thereby the driver would not receive unnecessary or excessive warning stimulations from the warning device. Herein, the "power source" means mainly the engine of the vehicle, but it should not be limited to the engine. It can be any types of power sources of vehicles, such as an electronic or electric vehicle having no engine, vehicles powered by fuel cells, vehicles having a hybrid power, etc. Namely, the present invention can be applied to any vehicles having no engine. Further, the specified (predetermined or predeterminable) start-warning period of time in "a specified start-warning period of time after a starting of a power source of the vehicle" does not necessarily need to be defined by counting from the start point of the power source, but it can include an embodiment where it is define by counting from a certain point when signal states have been stabilized after the power source starting. Also, the (predetermined or predeterminable) start-warning period of time can be determined properly from the human engineering standpoint based on the standard period of time for the drive to drive the vehicle after the cold starting of the power source. Also, the "seatbelt" of the present invention is typically considered to be the seatbelt of the rear seat, but it may also include one or more seatbelts of the driver's seat and/or the assistant's seat or any other security seatbelt such as childrens' seat belts etc. Further, "warning" of the present invention can be attained typically with the light from the lamp and/or LED and the like, but other means such as the sound from the buzzer or sound system and the like can be also applied. Herein, if the duplex system (with both an operational system and a standby system) is applied, the sufficient failsafe function will be provided.

According to a preferred embodiment of the present invention, the control device is configured or constituted so as to warn or indicate the use state of the seatbelt in a provisional-warning mode during a specified (predetermined or predeterminable) provisional-warning period of time when the specified (predetermined or predeterminable) start-warning period of time has lapsed after the power source starting, wherein the warning in the provisional-warning mode has a warning stimulation characteristic which is softer or less strong than that of the warning in the start-warning mode. Accordingly, since the warning is conducted with the softer warning stimulation for a while after the start-warning period of time has lapsed, the warning of the seatbelt use state can be provided to the driver without giving any too stimulative warning. Herein, "a softer warning stimulation characteristic" means that the output level of the warning device becomes lower (less bright, light color signaling lower danger, less shaded display, etc.), and/or that the warning style is changed to a less stimulative warning style. Namely, for example, in the warning device having the LED and the buzzer, the brightness level of the LED and/or the volume level of the buzzer are lowered, or the warning using both LED and buzzer is changed to the warning using only the LED. Herein, the brightness level may be further lowered in the latter case.

According to another embodiment of the present invention, the control device is configured constituted so as to enable the warning device in a warning mode to warn the driver of a warning state when the seatbelt is removed from the state of use thereof during the operation of the vehicle power source, and to enable the warning device in a safe mode to warn the driver of a safe state when the seatbelt is applied and changed to the state of use thereof during the operation of the vehicle power source, wherein the warning in the safe mode having the warning stimulation characteristic which is softer or less strong than that of the warning in the warning mode. Accordingly, since the warning style is changed according to the changing of the seatbelt use state during the power source operation, the driver can be warned properly according to the state of the seatbelt.

According to another embodiment of the present invention, a specified (predetermined or predeterminable) period of time for which the warning device is enabled in the warning mode is configured or constituted so as to be longer than the specified (predetermined or predeterminable) start-warning period of time. Accordingly, any unnecessarily long warning to the driver can be prevented at the start, while when the seatbelt use state or operation is changed to the state of use, the driver can be warned properly with a sufficiently long period of time.

According to further specific embodiment of the present invention, the specified (predetermined or predeterminable) period of time for which the warning device is enabled in the warning mode is configured or constituted so as to be longer than a specified (predetermined or predeterminable) period of time for which the warning device is enabled in the safe mode. Accordingly, even if there occurs the change in the seatbelt use state during the power source operation, any unnecessarily long warning to the driver can be prevented when the seatbelt use state is changed to the safe state. Meanwhile, when the seatbelt use state is changed to the dangerous state, the driver can be warned properly with a sufficiently long period of time.

According to another preferred embodiment of the present invention, the warning in the warning mode has the warning stimulation characteristic which is harder or stronger than that of the warning in the start-warning mode. Accordingly, since the warning stimulation characteristic in the warning mode is harder or stronger than that of the warning in the start-warning mode, the proper warning can be provided to the driver when it should be necessary. Herein, "a harder/stronger warning stimulation characteristic" means that the output level (i.e. brightness, color, shading, and/or size of lighting device and/or volume, frequency and/or type of sound) of the warning device becomes greater, and/or that the warning style is changed to a more stimulative warning style. Namely, for example, in the warning device having the LED and the buzzer, the warning with both the LED and the buzzer is provided at the same time, the brightness level of the LED is increased or the LED is turned on and off, or the volume level and/or frequency of the buzzer is increased.

According to further another embodiment of the present invention, the warning in the warning mode has the warning stimulation characteristic which is harder than that of the warning in the safe mode. Accordingly, since the warning stimulation characteristic in the warning mode is harder or stronger than that of the warning in the safe mode, the proper warning can be provided to the driver when it should be necessary.

According to the invention, there is further provided a control method for controlling a seatbelt use-state warning device, in particular according to the invention or a preferred embodiment thereof, comprising the following steps:
detecting a use/non-use or operation of at least one seatbelt of a vehicle by means of at least one seatbelt use- or operation-state detecting device;
controlling a warning device to warn a driver of a use state of the seatbelt based on a detecting result of said seatbelt use-state detecting device so as
   to warn the use state of the seatbelt in a start-warning mode during a specified (predetermined or predeterminable) start-warning period of time after a starting of a power source of the vehicle, to disable warning by said warning device when said specified (predetermined or predeterminable) start-warning period of time has lapsed after the power source starting, and
   to enable said warning device to warn the use state of the seatbelt for a specified (predetermined or predeterminable) period of time when the use or operation state of the seatbelt detected by said seatbelt use- or operation-state detecting device changes during an operation of the vehicle power source.

According to a preferred embodiment of the invention, said control is performed so as to warn the use state of the seatbelt in a provisional-warning mode during a specified (predetermined or predeterminable) provisional-warning period of time when said specified (predetermined or predeterminable) start-warning period of time has lapsed after the power source starting, said warning in the provisional-warning mode having a warning stimulation characteristic which is softer or less strong than that of said warning in the start-warning mode.

According to the invention, there is further provided a computer program product comprising computer-readable instructions which when loaded and run on a suitable computer system performs the steps of the control method according to claim the invention or a preferred embodiment thereof.

Other features, aspects, and advantages of the present invention will become apparent from the following description which refers to the accompanying drawings.
FIG. 1 is an elevation view of a major part of a device of the present invention.
FIG. 2 is an electric circuit diagram of a seatbelt warning device of FIG. 1.
FIG. 3 is a wiring diagram schematically showing an inside constitution of a microprocessor of FIG. 2.
FIG. 4 is a flowchart showing steps (program contents) to control a buzzer and a lamp by the microprocessor of FIG. 2.
FIG. 5 is a flowchart showing steps (program contents) to control the buzzer and the lamp by the microprocessor of FIG. 2.

Hereinafter, preferred embodiments of a preferred embodiment of the present invention will be described referring to the accompanying drawings. It should be understood that even though embodiments are separately described, single features thereof may be combined to additional embodiments.

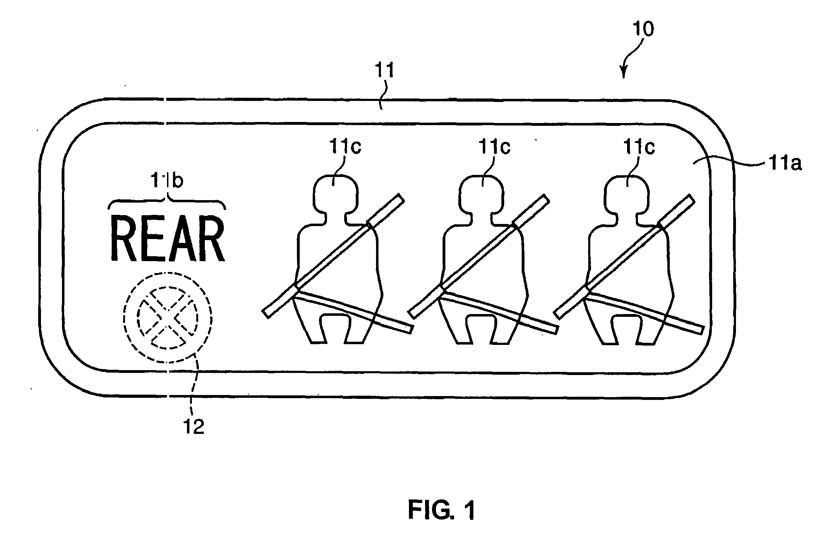

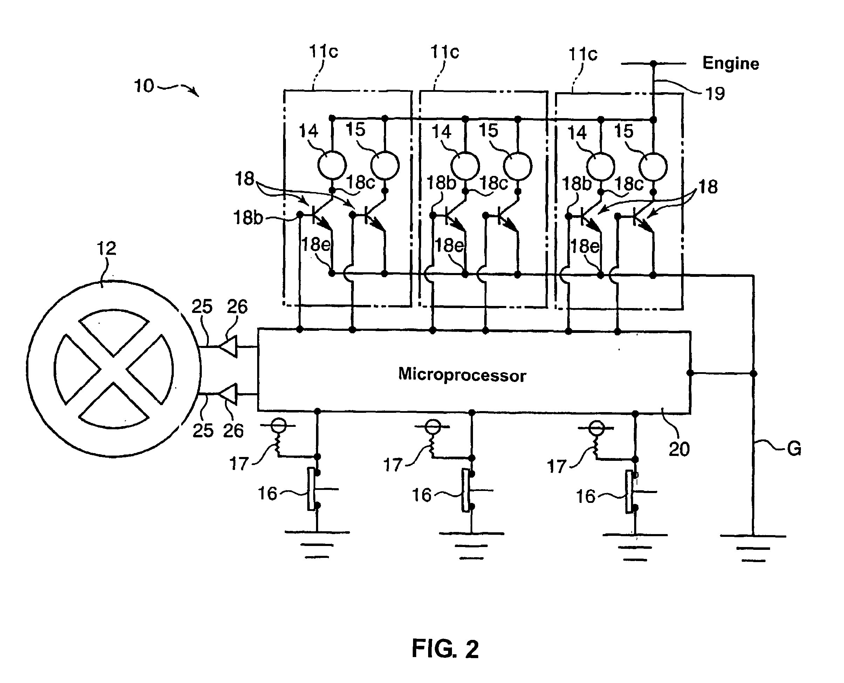

FIG. 1 is the elevation view of the major part of the device of the present invention. FIG. 2 is the electric circuit diagram of a seatbelt warning device 10 of FIG. 1.

The seatbelt warning device 10 of the present embodiment comprises an indicating panel or display 11, a buzzer or audible indicator 12 provided at or in conjunction with the indicating panel 11, and one or more lamps 14, 15 stored in or arranged near the indicting panel 11.

The indicating panel 11, preferably a thin case member, includes a plate member 11a which is laterally long at its face. The plate member 11a is made e.g. from an dark-colored acryl resin material, and there is provided an indication 11b of a different-colored (e.g. white-colored) print "REAR" or the like, which means or refers to the rear seat, at one end side (a left side end in the figure) of the plate member 11 a. At the right side of the indication 11 b are provided one or more, preferably a plurality of passenger's illustrations 11c which correspond to the number of the seatbelts provided. These portions preferably are constituted so as to be substantially transparent for lights of the respective lamps 14, 15. Alternatively, the portions may be themselves form or be part of a light emitting device such as LEDs, liquid crystal displays, plasma displays, monitors or the like.

The buzzer 12 (as a preferred audible indicator) preferably is located in a portion where it can not be easily recognized.

A pair of the lamps 14 and 15, which are preferably made of one or more LEDs, are provided as one set for each of the illustrations 11c. Herein, for example, the lamp 14 is a green lamp which means that the seatbelt is in the state of use, while the lamp 15 is a red lamp which means that the seatbelt is in the state of non-use.

A microprocessor 20 is installed in or in conjunction with the indicating panel 11 as a control device to control the buzzer 12 and/or the lamp(s) 14, 15, as illustrated in FIG. 2.

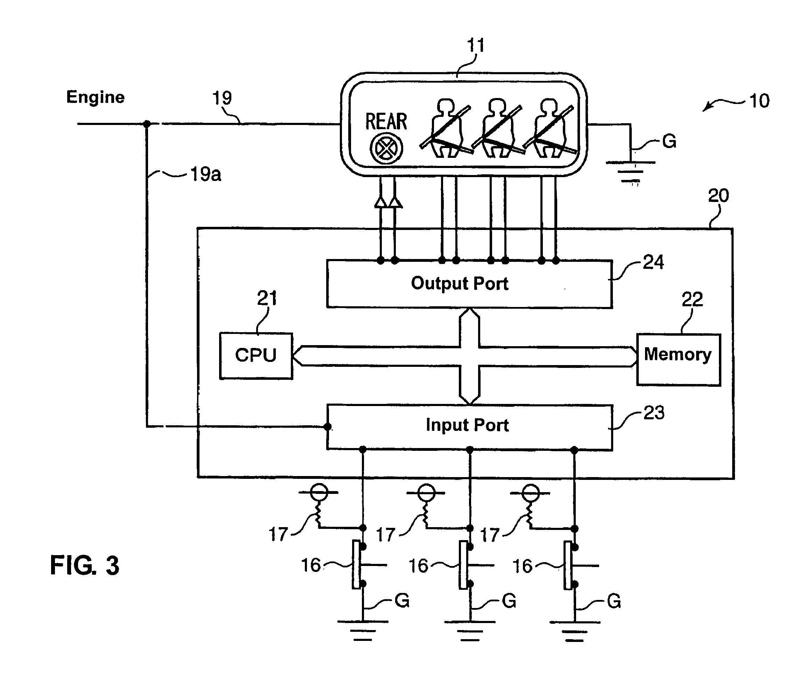

FIG. 3 is the wiring diagram schematically showing the inside configuration of the microprocessor 20 of FIG. 2.

As illustrated in FIGS. 2 and 3, the microprocessor 20 comprises a CPU 21, a Memory 22, an Input Port 23 and an Output Port 24. The CPU 21 processes input signals from the Input Port 23 and generates one or more control signals to the buzzer 12 and/or the lamp(s) 14, 15 via the Output Port 24, based on a program stored or storable in the Memory 22.

The Memory 22 (preferably comprising read-only-memory ROM and/or random-access-memory Ram) includes memory area for a program to perform a flowchart or routine, which will be described below, and/or for corresponding data. In the present embodiment, the program stored in the Memory 22 includes a start-warning mode to warn at a starting of an engine as a power source of the vehicle, a provisional-warning mode to keep warning provisionally during a specified (predetermined or predeterminable) period of time after the start-warning mode is finished, a warning mode to warn when the seatbelt is removed from its state of use, and/or a safe mode to warn when the seatbelt is applied and changed to its state of use.

The start-warning mode is the one where the seatbelt use state is indicated only by the lamp(s) 14, 15 (as a preferred first indication or warning mode).

The provisional-warning mode is the one where the state of the start-warning mode is performed provisionally with a softer warning stimulation characteristic. The warning with the softer warning stimulation characteristic can be attained, for example, by the warning with a reduced brightness and/or a different color or shading of the lamps 14, 15 (as a preferred second indication or warning mode).

The warning mode is the one where the state of the seatbelt (the state of non-use of the seatbelt) is warned with the harder warning stimulation characteristic. The warning with the harder warning stimulation characteristic in the warning mode can be attained, for example, by the warning with a (e.g. twice) warning by the buzzer 12 and with an increased brightness and/or a different color or shading of the lamp 15 (as a third indication or warning mode).

The safe mode is the one where the use state of the seatbelt is warned with another softer warning stimulation characteristic. The warning with this another softer warning stimulation characteristic in the safe mode can be attained, for example, by the warning with (e.g. once) warning by the buzzer 12 and with an increased brightness and/or a different color or shading of the lamp 14 (as a preferred fourth indication or warning mode).

Herein, respective warning period of times t1, t20, t21 and t22, for which the warning is enabled, are set for the above-described respective modes. In other words, the first to fourth indication or warning modes have respective indication patterns which differ from each other so that they can indicate the respective warning/indication mode in a different way (different colours, length of lighting, mode of lighting (e.g. blinking or intermittent, permanent ON/OFF, etc.), brightnesses, sounds, sound volume, and/or other characteristics) to the driver and/or other passengers.

In the start-warning mode, the start-warning period of time t1 is set and this period of time is counted up with a counter or time detector by the program in which the counter value C is set so as to be a specified (predetermined or predeterminable) value C1 in the start-warning mode. Herein, the start-warning period of time t1 preferably is set properly from the human engineering standpoint, based on the standard period of time until the vehicle driving starts. In the present embodiment, this is set at the minimal period of time (e.g. few seconds) which is necessary to warn the driver who starts a driving. Thereby, the driver will not be bothered by the seatbelt warning for an improperly long time.

In the provisional-warning mode, the provisional-warning period of time t20 is set and this period of time is counted up with the counter value C set to a specified (predetermined or predeterminable) value C20. Herein, the provisional-warning period of time t20 is set properly at need.

In the warning mode, the warning period of time t21 is set and this period of time is counted up with the counter value C set to a specified (predetermined or predeterminable) value C21. Herein, the warning period of time t21 is set so as to be sufficiently longer than the start-warning period of time t1. Thereby, the careless removal of the seatbelt can be warned surely to the driver.

In the safe mode, the safe-warning period of time t22 is set and this period of time is counted up with the counter value C set to a specified (predetermined or predeterminable) value C22. Herein, the value C22 for the safe-warning period of time t22 is set so as to be a proper value to warn the driver that the driver is in the safe state. For example, this value may be set at the substantially same value as the value C1 for the start-warning period of time t1, or this value may be set at a shorter value than that. This is because the buzzer is also used as the warning device in the present embodiment and thereby the driver can easily recognize the warning even for a short or shorter period of time.

Accordingly, these period of times t1, t20, t21 and t22 will be described as below.
t1 <= t20 or t1 > t20
t1 < t21
t1 <= t22 or t1 > t22

Namely, in the case where the start-warning period of time t1 is set as the standard, only the warning period of time t21 should be set so as to be longer than the start-warning period of time t1 and the other period of time t20 and t22 can be set properly at need.

Also, the warning embodiments (level of the warning stimulation) can be set in a similar relationships to the above-described period of time.

Further, these period of times t1, t20, t21 and t22 may be set at constant values or variable values which change according to, for example, the vehicle speed. In the latter case, the proper warning can be attained surely by prolonging these period of=times t1, t20, t21 and t22 under the condition that the noise increases with the increased vehicle speed and/or depending on a noise detector.

Herein, in the present embodiment the start of control is preferably delayed for a specified (predetermined or predeterminable) period of time t0 in order to avoid transitional noises which will occur at the engine start, and a specified (predetermined or predeterminable) value C0 for this time is memorized in the Memory 22.

A change of the seatbelt use state can be determined specifically by memorizing/updating the ON/OFF state of one or more switches, preferably of B-point switches 16, which are attached or correspond to respective seatbelt buckles (not illustrated) as a preferred fastening member for the seatbelt, with first-in-first-out (FIFO) algorithm. For example, when the B-point switch 16 is ON (the seatbelt is not in the state of use), a state value T is set at 0. Meanwhile, when the B-point switch 16 is OFF (the seatbelt is in the state of use), the state value T is set at 1. Then, according to the FIFO algorithm, as the result of the state transition of the Memory 22, if the state value T memorized in the Memory 22 is changed from 1 to 0, it is determined that the seatbelt state has been changed from the state of use to the state of non-use. Meanwhile, the state value T memorized is changed from 0 to 1, it is determined that the seatbelt state has been changed from the state of non-use to the state of use.

The B-point switches 16 attached or corresponding to the seatbelt buckles are or are to be connected to the Input Port 23. Also, one or more pull-up registers 17 are or are to be connected so as to be provided between the B-point switches 16 and the Input Port 23, respectively. The ON/OFF state of the B-point switches 16 is detected by the pull-up electric current flowing down the pull-up registers 17.

To the Output Port 21 preferably are to be connected the above-described buzzer 12 and/or the one or more lamps 14, 15.

Two circuit wires 25 are to be connected to the buzzer 12 and have buffers 26, respectively. Thus, the CPU 21 of the microprocessor 20 can control the ON/OFF of the buzzer 12 (as the preferred audible indicator) and the warning stimulation characteristic (level) of the buzzer 12 (a sound frequency change and/or a sound volume) with a simple structure.

The respective lamps 14, 15 are to be connected to respective npn transistors 18, and bases 18b of the npn transistors 18 are connected to the Output Port 24 of the microprocessor 20. Herein, emitters 18e of the npn transistors 18 are connected to a ground line G. Meanwhile, to the lamps 14, 15 is to be connected an electric supply line 19 which supplies the electricity or power during the engine operation. Thereby, the lamps 14, 15 preferably are configured so as to be on only during the engine operation. The electric supply line 19 is also connected to the Input Port 23 of the microprocessor 20 via a wiring 19a (see FIG. 3). Thereby, the CPU 21 of the microprocessor 20 can detect the engine start.

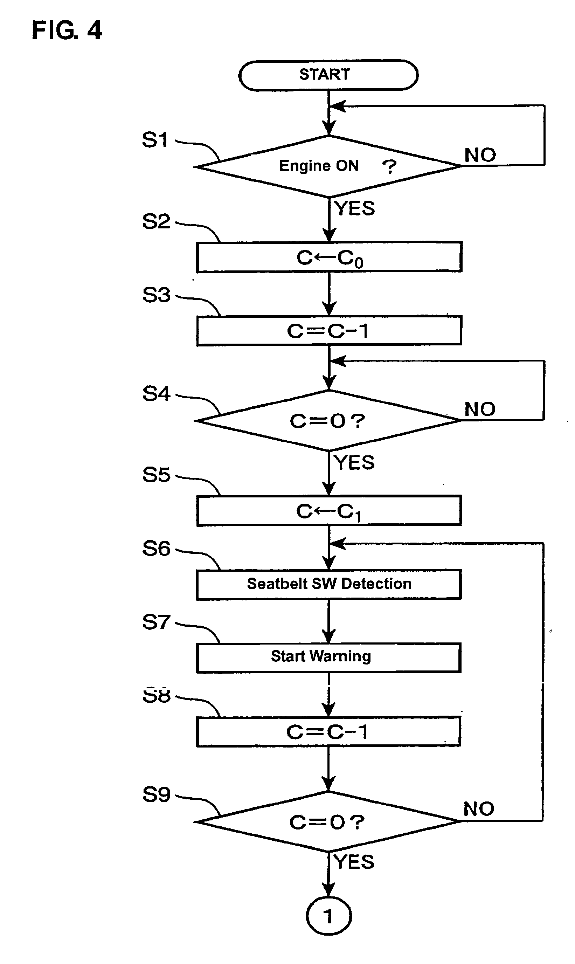

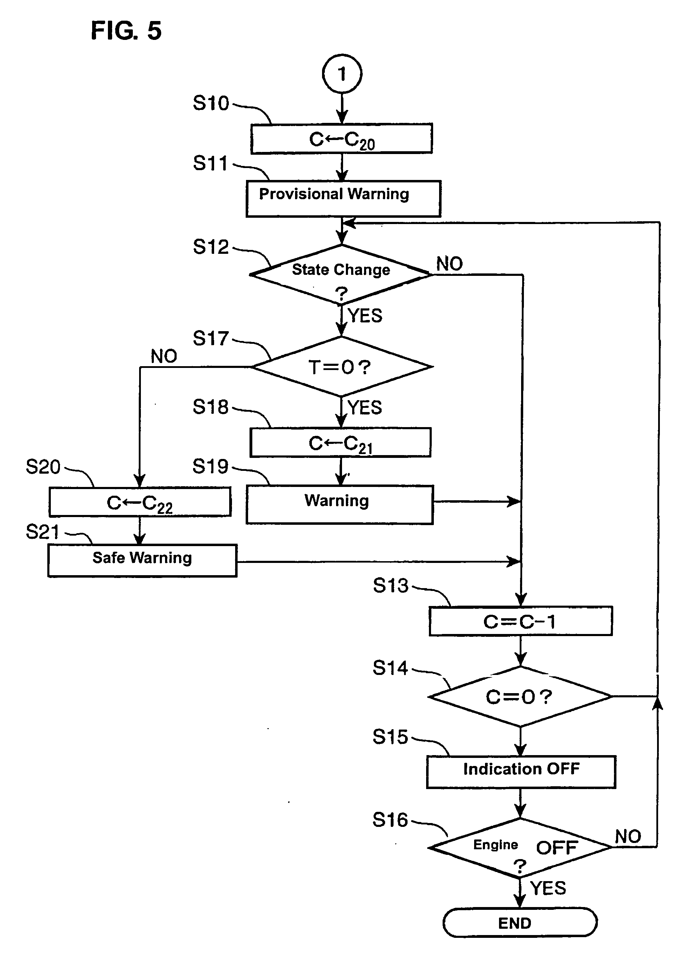

Next, the control program memorized in the Memory 22 of the microprocessor 20 will be described. FIGS. 4 and 5 are flowcharts showing steps (program or routine contents) to control the buzzer 12 and/or the lamp(s) 14, 15 by the microprocessor 20.

In FIG. 4, the microprocessor 20 detects the engine start (step S1), and initializes the counter value C so as to be C0 (step S2). This is done because the transitional noises occurs at the engine start and therefore the control preferably is stopped or suspended for a while.

The counter value C has decremented with a specified (predetermined or predeterminable) unit (for example, several milliseconds) (step S3), and it is determined that the transitional period of time t0 has lapsed (step S4). After the transitional period of time t0 has lapsed and the counter value C has become 0, the CPU 21 resets or sets the counter value C so as to be C1 corresponding to the start-warning period of time t1 (step S5).

Next, the CPU 21 warns the seatbelt use state according to the operation of the fastening member for the seatbelt, preferably according to the connecting state of the B-point switch 16 of the seatbelt which is connected to the Input Port 23 (steps S6, S7). Specifically, when the B-point switch 16 of the seatbelt closes the circuit at the time the specified (predetermined or predeterminable) value C1 corresponding to the start-warning period of time t1 is set, the red lamp 14 of the illustration 11 c of the corresponding seatbelt is turned on (as the preferred first indication/warning mode). Thereby, it is warned that the corresponding seatbelt is not in the state of use. Meanwhile, when the B-point switch 16 of the seatbelt opens the circuit by the seatbelt being applied, the CPU 21 turns on the green lamp 15 of the illustration 11c of the corresponding seatbelt. At this point, the passenger will apply the seatbelt, and thereby the CPU 21 memorizes the connecting state of the B-point switch 16 in the Memory 22 and updates the data with the FIFO algorithm.

The CPU 21 waits until the specified value C1 corresponding to the start-warning period of time t1 becomes 0 during the engine operation (step S9). At the time the specified (predetermined or predeterminable) value C1 corresponding to the start-warning period of time t1 has become 0, namely, the specified (predetermined or predeterminable) start-warning period of time t1 has lapsed, the control proceeds to the flowchart of FIG. 5.

In the flowchart of FIG. 5, after the collapse of the specified start-warning period of time t1, the CPU 21 sets the counter value C so as to be the specified value C2 corresponding to the provisional-warning period of time t20 (step S10) in order to count up the provisional-warning period of time t20 for provisionally keeping on the indication by the indicating panel 11. The lamps 14, 15 at the indicating panel 11 are operated in the provisional-warning mode (step S11), as the preferred second indication/warning mode. Thereby, the seatbelt use state at the start can be warned without giving the driver an excessive warning stimulation. The specified (predetermined or predeterminable) value C2 corresponding to the provisional-warning period of time t20 can be also set so as to be a value corresponding to a very short period of time, and it may be set so as to be smaller than the specified value C1 corresponding to the start-warning period of time t1.

The CPU 21 monitors the change of the seatbelt use state after the mode is changed to the provisional-warning mode (step S12). When there is no change in the seatbelt use state (no change in the state value T), the counter value C has decremented with the specified (predetermined or predeterminable) unit (step S13). And, when the counter value C has become 0, the indication is OFF (steps S14, S15). Thereby, any unnecessary warnings to the driver can be prevented. Further, it is determined whether the engine is turned OFF or not (step S16). When the engine stops or is switched off, the control ends. When the engine still operates, the control sequence returns to the step S12.

Meanwhile, when the passenger removes the seatbelt during the engine operation, the B-point switch 16 attached or corresponding to the seatbelt buckle closes the circuit, and thereby the state value T is changed from 1 to 0. The CPU 21 detects this state change with the state value T and determines whether or not the change is from the state of use of the seatbelt to the state of non-use of the seatbelt (step S17). Since the state value T is changed from 0 to 1 in the above-described embodiment, the control by the CPU 21 moves on to the warning mode (steps S18, S19). In the warning mode, at first, the counter value C is set so as to be the specified (predetermined or predeterminable) value C21 corresponding to the warning period of time t21 (step S18), and the warning in the warning mode is conducted (step S19), as the preferred third indication/warning mode. As described above, since the warning in the warning mode warns the use state (the state of non-use) of the seatbelt with the harder warning stimulation characteristic, the necessary warning can be provided properly to the driver for the sufficiently long warning period of time (the specified (predetermined or predeterminable) value C21 corresponding to the warning period of time t21). After the step S19, the control moves on to steps after the step S13. As a result, until the warning period of time t21 has lapsed, the warning in the warning mode (as the preferred third indication/warning mode) is conducted as long as the sate of non-use of the seatbelt continues. Then, at the time when the warning period of time t21 has lapsed, the control moves on to the monitoring state of the step S12 by way of the steps S14 through S16.

Meanwhile, when the seatbelt is applied to the passenger, the seatbelt operating sensor senses a change in operation, preferably the B-point switch 16 of the seatbelt is turned OFF again, and the memory 22 is updated from 1 to 0. Thereby, the control moves to the safe mode by the determination of the step S17 (steps S20, S21). In the safe mode, the counter value C is set so as to be the specified (predetermined or predeterminable) value C22 corresponding to the safe-warning period of time t22 (step S20), and the seatbelt use state is warned with the softer warning stimulation characteristic (step S21), as the preferred fourth indication/warning mode).

After the execution of the warning in the safe mode in step S21, the control moves to the step S13. Then, at the time the specified at least partly value C22 corresponding to the safe-warning period of time t22 has substantially elapsed or become 0, the control moves to the monitoring state of the step S12 by way of the steps S15, S16. Also, when the engine stops, the control ends up by the monitoring at the step S16.

As described above, according to the present embodiment, the use state of the seatbelt is indicated in the start-warning mode (as the preferred first indication/warning mode) during the start period of time so that the driver can recognize the use state of the seatbelt, the driver can properly know the use state of the passenger's seatbelt to confirm the safety at this point. Meanwhile, when the specified start-warning period of time t1 has lapsed after the power source starting, the lamp(s) 14, 15 as the warning device is turned off at the specified (predetermined or predeterminable) timing and thereby the driver would not receive unnecessary warning stimulations from the lamps 14, 15.

Also, according to the present embodiment, the microprocessor 20 as the control device is constituted, as described in the steps S10, S11 of FIG. 5, so as to warn with the lamp(s) 14, 15 the use state of the seatbelt in the provisional-warning mode (as the preferred second indication/warning mode), which has the softer warning stimulation characteristic than the start-warning mode (as the preferred first indication/warning mode), during the specified (predetermined or predeterminable) provisional-warning period of time t20 when the specified (predetermined or predeterminable) start-warning period of time t1 has lapsed after the engine starting. Accordingly, since the warning is conducted with the softer warning stimulation for a while after the start-warning period of time t1 has lapsed, the warning of the seatbelt use state can be provided properly to the driver without giving any too stimulative warning.

Also, according to the present embodiment, the microprocessor 20 operates the buzzer 12 and/or the lam(s) 14, 15 as the warning device in the warning mode (as the preferred third indication/warning mode) to warn the driver of the warning state when the seatbelt is removed from it's state of use during the engine operation, as described in the steps S12, S16-S18 of FIG. 5. And, the microprocessor 20 operates the buzzer 12 and the lams 14, 15 in the safe mode (as the preferred fourth indication/warning mode) to warn the driver of the safe state, which has the softer warning stimulation characteristic than the warning mode, when the seatbelt is applied and changed to its state of use during the engine operation, as described in the steps S12, S16, S19, S20 of FIG. 5. Accordingly, since the warning mode is changed according to the changing of the seatbelt use state during the engine operation, the driver can be warned properly according to the state of the seatbelt.

Particularly, according to the present embodiment, the start-warning period of time t1 is set so as to be the minimal period of time which can warn the driver, and the specified (predetermined or predeterminable) period of time for the warning mode (the warning period of time t21) is constituted so as to be longer than the start-warning period of time t1. Accordingly, any unnecessarily long warning to the driver can be prevented at the start, while when the seatbelt use state is changed to the state of use, the driver can be warned properly with a sufficiently long period of time.

Further, according to the present embodiment, the specified (predetermined or predeterminable) period of time for the safe mode (the safe-warning period of time t22) is set so as to be the minimal period of time which can warn the driver, and the specified (predetermined or predeterminable) period of time for the warning mode (the warning period of time t21) is configured so as to be longer than the specified (predetermined or predeterminable) period of time for the safe mode (the safe-warning period of time t22). Accordingly, even if there occurs the change in the seatbelt use state during the engine operation, any unnecessarily long warning to the driver can be prevented when the seatbelt use state is changed to the safe state. Meanwhile, when the seatbelt use state is changed to the dangerous state, the driver can be warned properly with the sufficiently long period of time.

Further, according to the present embodiment, the warning in the start-warning mode is set so as to be the minimal or low warning stimulation characteristic which can warn the driver, and the warning in the warning mode has the warning stimulation characteristic (i.e. light color, light brightness, light arrangement, light display size, sound volume and/or sound frequency/characteristic) which is harder or stronger than that of the warning in the start-warning mode. Accordingly, the proper warning can be provided to the driver when it should be necessary.

Further, according to the present embodiment, the warning in the safe mode is set so as to be the minimal or low warning stimulation characteristic which can warn the driver, and the warning in the warning mode has the warning stimulation characteristic which is harder or stronger than that of the warning in the safe mode. Accordingly, since the warning stimulation characteristic in the warning mode is harder or stronger than that of the warning in the safe mode, the proper warning can be provided to the driver when it should be necessary.

As described above, according to the present embodiment, during the driving start or when the seatbelt use state has changed during the engine operation, the warning is properly provided. Meanwhile, when the specified (predetermined or predeterminable) start-warning period of time has lapsed after the engine start, the buzzer 12 and the lamps 14, 15 are turned off (disabled) when there is no change of the seatbelt use state. Thus, the driver will not receive any unnecessary stimulations from the buzzer 12 and/or the lamp(s) 14, 15. Accordingly, the proper and sufficient warning can be provided to the driver.

Herein, the above-described embodiments are exemplified preferred embodiments of the present invention, and the present invention should not be limited to these embodiments

For example, the above-described "softer warning stimulation characteristic" may be such that the buzzer 12 is operated together. Also, the warning style of the buzzer 12 and lamp(s) 14, 15 may be changed other than lowering the output level of these. For example, in the embodiment in which the warning by the lamps 14, 15 and the warning by the buzzer 12 are combined, the lamps 14, 15 may be changed such that the brightness of the LED of these lamps is lowered and/or the color thereof is changed or the buzzer 12 may be changed such that the sound volume is lowered, other than the above-described embodiment.

Likewise, the above-described "harder warning stimulation characteristic" may be such that the increasing of the brightness of the lamp(s) 14, 15 and/or the on-off turning of these lamps and/or the increasing of the volume of the buzzer are combined, other than the operation of both the buzzer 12 and the lamps 14, 15.

Further, the steps S10, S11 can be omitted in the flowchart of FIG. 5 described above.

Also, the steps S19 and S20 can be omitted in the flowchart of FIG. 5 described above. In this-case, the warning is conducted only when the driver needs to be warned.

Herein, when the above-described constitution is the duplex system (with both the operational system and the standby system), the sufficient failsafe function can be provided.

According to the above embodiment B-point switches 16, which are attached or correspond to respective seatbelt buckles (not illustrated) are used for detecting a use/non-use of the seatbelt. However, other seatbelt operation detectors such as proximity sensors, belt extension detectors, load detectors or the like may be used alternatively or additionally.

The present invention should not be limited to the above-described embodiments, but any other modifications and improvements may be applied within the scope of a sprit of the present invention.

## Claims

1. A seatbelt use-state warning device (10), comprising:
at least one seatbelt use-state detecting device (16) to detect a use/non-use of at least one seatbelt of a vehicle;
a warning device (11, 12, 14, 15) to warn a driver of a use state of the seatbelt based on a detecting result of said seatbelt use-state detecting device (16); and
a control device (20) to control said warning device (11, 12, 14, 15),
wherein said control device (20) is configured so as to warn the use state of the seatbelt in a start-warning mode during a specified start-warning period of time (t1) after a starting of a power source of the vehicle, to disable warning by said warning device (11, 12, 14, 15) when said specified start-warning period of time (t1) has lapsed after the power source starting, and to enable said warning device (11, 12, 14, 15) to warn the use state of the seatbelt for a specified period of time (t21, t22) when the use state of the seatbelt detected by said seatbelt use-state detecting device (16) changes during an operation of the vehicle power source.

2. The seatbelt use-state warning device (10) of claim 1, wherein said control device (20) is configured so as to warn the use state of the seatbelt in a provisional-warning mode during a specified provisional-warning period of time (t20) when said specified start-warning period of time (t1) has lapsed after the power source starting, said warning in the provisional-warning mode having a warning stimulation characteristic which is softer than that of said warning in the start-warning mode.

3. The seatbelt use-state warning device (10) of claims 1 or 2, wherein said control device (20) is configured so as to enable said warning device (11, 12, 14, 15) in a warning mode to warn the driver of a warning state when the seatbelt is removed from the state of use thereof during the operation of the vehicle power source, and to enable said warning device (11, 12, 14, 15) in a safe mode to warn the driver of a safe state when the seatbelt is applied and changed to the state of use thereof during the operation of the vehicle power source, said warning in the safe mode having a warning stimulation characteristic which is softer than that of said warning in the warning mode.

4. The seatbelt use-state warning device (10) of claim 3, wherein a specified period of time (t21) for which the warning device (11, 12, 14, 15) is enabled in said warning mode is configured so as to be longer than said specified start-warning period of time (t1).

5. The seatbelt use-state warning device (10) of claim 4, wherein said specified period of time (t21) for which the warning device (11, 12, 14, 15) is enabled in said warning mode is configured so as to be longer than a specified period of time (t22) for which the warning device (11, 12, 14, 15) is enabled in said safe mode.

6. The seatbelt use-state warning device (10) of claims 4 or 5, wherein said warning in the warning mode has a warning stimulation characteristic which is harder than that of said warning in the start-warning mode.

7. The seatbelt use-state warning device (10) of any one claims 4 through 6,
wherein said warning in the warning mode has a warning stimulation characteristic which is harder than that of said warning in the safe mode.

8. A control method for controlling a seatbelt use-state warning device (10), comprising the following steps:
detecting a use/non-use of at least one seatbelt of a vehicle by means of at least one seatbelt use-state detecting device (16);
controlling a warning device (11, 12, 14, 15) to warn a driver of a use state of the seatbelt based on a detecting result of said seatbelt use-state detecting device (16) so as
to warn the use state of the seatbelt in a start-warning mode during a specified start-warning period of time (t1) after a starting of a power source of the vehicle, to disable warning by said warning device (11, 12, 14, 15) when said specified start-warning period of time (t1) has lapsed after the power source starting, and
to enable said warning device (11, 12, 14, 15) to warn the use state of the seatbelt for a specified period of time (t21, t22) when the use state of the seatbelt detected by said seatbelt use-state detecting device (16) changes during an operation of the vehicle power source.

9. The control method of claim 8, wherein said control is performed so as to warn the use state of the seatbelt in a provisional-warning mode during a specified provisional-warning period of time (t20) when said specified start-warning period of time (t1) has lapsed after the power source starting, said warning in the provisional-warning mode having a warning stimulation characteristic which is softer than that of said warning in the start-warning mode.

10. A computer program product comprising computer-readable instructions which when loaded and run on a suitable computer system performs the steps of the control method according to claim 8 or 9.
